**Europäisches Patentamt**

**European Patent Office**

**Office européen des brevets**

(11) Veröffentlichungsnummer: **0 251 057**
**A1**

(12) # EUROPÄISCHE PATENTANMELDUNG

(21) Anmeldenummer: **87108776.3**

(51) Int. Cl.⁴: **H04R 31/00** , H04R 9/06

(22) Anmeldetag: **19.06.87**

(30) Priorität: **21.06.86 DE 3620889**
**07.02.87 DE 3703840**

(43) Veröffentlichungstag der Anmeldung:
**07.01.88 Patentblatt 88/01**

(84) Benannte Vertragsstaaten:
**AT BE CH DE ES FR GB GR IT LI LU NL SE**

(71) Anmelder: **EWD Electronic-Werke**
**Deutschland GmbH**

**D-7730 Villingen-Schwenningen(DE)**

Anmelder: **Elektrotechnik Ehmann GmbH**
**Bernbrunnerstrasse 54**
**D-6953 Gundelsheim-Höchstberg(DE)**

(72) Erfinder: **Thiele, Karl-Heinz, Dipl.-Phys.**
**Lerchenweg 1**
**D-3150 Peine(DE)**
Erfinder: **Ehmann, Jürgen**
**Justinus-Kernerstrasse 23**
**D-6953 Gundelsheim(DE)**

(74) Vertreter: **Körner, Peter, Dipl.-Ing.**
**E W D Electronic-Werke Deutschland GmbH**
**Patent- und Lizenzabteilung Göttinger**
**Chaussee 76**
**D-3000 Hannover 91(DE)**

(54) **Lautsprecher.**

(57) Bei einem Lautsprecher erfolgt die Verbindung zwischen der Sicke (5) und der Membran (3) und/oder dem Korb (1) erfindungsgemäß durch Ultraschallschweißen oder durch Hießsiegelung. Dadurch wird die Fertigung vereinfacht, der Wirkungsgrad erhöht und der Klirrfaktor verringert.

Fig.1

EP 0 251 057 A1

## Lautsprecher

Lautsprecher enthalten im wesentlichen einen Lautsprecherkorb, ein Magnetsystem mit einem Permanentmagneten und einen ringförmigen Luftspalt, eine Membran mit der Schwingspule, eine Sicke und eine Zentriermembran. Die Sicke und die Zentriermembran dienen zur federnden Aufhängung der Membran an dem Korb, und zwar am äußerem Umfang am vorderen Ende des Lautsprechers einerseits und im Bereich der Schwingspule andererseits. Durch diese federnde Aufhängung wird bewirkt, daß die als starr angenommene Membran in Richtung der Achse des Lautsprechers entsprechend dem der Schwingspule zugeführten NF-Signal schwingen kann. Die Membran besteht vorzugsweisen aus Papier oder Kunststoff, wie insbesondere Polykarbonat , die Sicke z.B. aus PVC, Gummi oder Schaumstoff.

Insbesondere bei sogenannten Langhublautsprechern sind die Membran und die Sicke zwei Bauteile aus verschiedenem Material, die somit über den Umfang der Membran am vorderen Ende verbunden werden müssen. Die Sicke ist mit ihrem äußerem Umfang entsprechend mit dem vorderen Ende des Korbes verbunden.

Die Verbindung zwischen Sicke und Membran und zwischen Sicke und Lautsprecherkorb erfolgt in bekannter Weise durch Klebevorgänge. Derartige Klebevorgänge habEn in der Massenfertigung bestimmte Nachteile. Sie erfordern insbesondere einN gewisse Wartezeit oder Aushärtzeit bis zum Trocknen des Klebers, d.h. die Lautsprecher müssen bei der Fertigung eine gewisse Zeit ruhen und können nicht weiter verarbeitet werden.

Der Erfindung liegt die Aufgabe zugrunde, bei einem Lautsprecher der beschriebene Art die Fertigung zu vereinfachen und insbesondere die Fertigungszeit zu verkürzen.

Diese Aufgabe wird durch die in den Ansprüchen 1 bis 3 beschriebene Erfindung gelöst. Vorteilhafte Weiterbildungen der Erfindung sind in den Unteransprüchen beschrieben.

Bei der erfindungsgemäße Lösung entfallen weitestgehend die bisher beim Kleben benötigten Wartezeiten oder Aushärtzeiten, die die Fertigungszeit beträchtliche erhöhen. Die Zeit, die für das Ultraschallschweißen, die Heißsiegelung oder die Wärmebehandlung benötigt wird, beträgt maximal 3 - 5 s. Danach ist die Verbindung der Sicke mit der Membran bzw. dem Korb vollständig hergestellt, so daß der Lautsprecher weiter verarbeitet werden kann. Dadurch werden die Lohnkosten für die Montage des Lautsprechers verringert. Über die Vereinfachung der Fertigung hinaus wird aber auch eine Verbesserung der Eigenschaften des Lautsprechers erzielt. Zunächst wird eine größere Genauigkeit des Schalldruck-und Resonanzverhaltens durch enger tolerierbare Kunststoffteile erreicht. Es hat sich gezeigt, daß die Verbindung durch Ultraschallschweißen oder Heißsiegelung wesentlich gleichmäßiger ist und insbesondere gegenüber dem Kleben weniger zusätzliche Masse in Form des Klebers benötigt. Versuche an einem erfindungsgemäß hergestellten Lautsprecher haben gezeigt, daß weniger Partialschwingungen auftreten, Wirkungsgrad und Schalldruck erhöht werden und auch der Klirrfaktor verringert wird. Insbesondere wurden bei einem erprobten Lautsprecher bisher auftretende Überhöhungen des Klirrfaktors bei 800 Hz bis 1 kHz beseitigt. Wenn die Membran aus Zellulose oder Papier besteht, erfolgt die Verbindung zwischen der Sicke und der Membran vorzugsweise durch Heißsiegelung. Wird eine Membran aus Polykarbonat verwendet, so eignet sich für eine Wärmebehandlung besonders gut thermoplastisches Polyuretan. Die Wärmebehandlung kann dann auf eine Druckbeaufschlagung der zu verbindenden Bereiche von Sicke und Membran bzw. Korb unter gleichzeiger Wärmezufuhr beschränkt werden ohne daß weitere Klebe-oder Lösemittel erforderlich sind.

Die Erfindung wird anhand der Zeichnung an einem Ausführungsbeispiel erläutert. Darin zeigen

Fig. 1 den Aufbau eines bekannten Lautsprechers mit den beschriebenen Teilen,

Fig. 2 im Prinzip den Vorgang der Heißsiegelung und

Fig. 3 im Prinzip den Vorgang des Ultraschallschweißens.

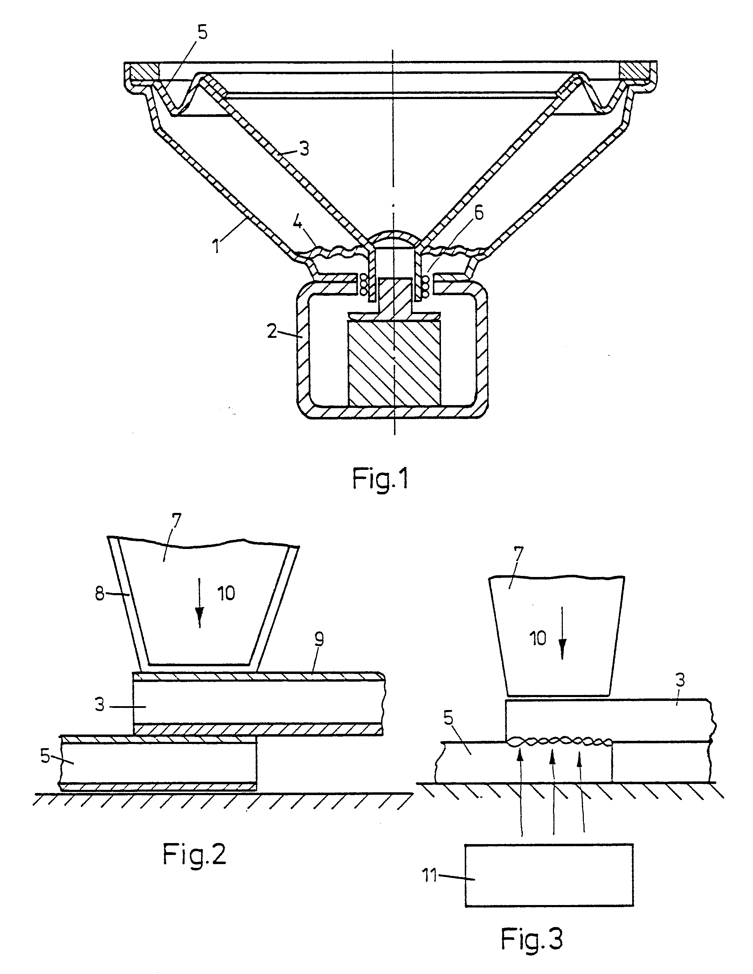

Fig. 1 zeigt einen Lautsprecher mit dem Lautsprecherkorb 1, dem Magnetsystem 2, der Membran 3, der Zentriermembran 4, der Sicke 5 sowie der Schwingspule 6. Die Sicke 5 ist an ihrem äußeren Umfang mit dem Korb 1 und mit ihrem inneren Umfang mit dem äußeren Umfang der Membran 3 verbunden. Diese Verbindungen können durch Ultraschallschweißen, durch Heißsiegelung oder durch eine Wärmebehandlung erfolgen. Je nach Art der Fertigung oder der Fertigungsstätte kann die eine oder die andere Art der Verbindung oder auch beide in Kombination angewendet werden, z.B. Ultraschallschweißen für die Verbindung zwischen Sicke 5 und Korb 1 und Heißsiegelung für die Verbindung zwischen Sicke 5 und Membran 3 und umgekehrt oder eine Wärmebehandlung für beide Verbindungen. Das kann sich auch daraus ergeben, daß in vielen Fällen der Schwingeinsatz mit der Sicke 5, der Membran 3 der Zentriermembran 4 und der Schwingsspule 6 in einer Fertigungsstätte und der Einbau dieses Schwingeinsatzes in den Korb 1 und das Magnetsystem 2 zur Herstellung des kompletten Lautsprechers in einer anderen Fertigungsstätte erfolgen.

In Fig. 2 sind die Ränder der Sicke 5 und der Membran 3 aufeinandergelegt, wobei Sicke 5 und Membran 3 an ihren Oberflächen mit einer Schicht 9 aus einem Heißsiegellack versehen sind. Auf die Überlappungsstelle wirkt ein Stempel 7 in Richtung 10 mit Druck ein. Der Stempel 10 ist mit einer Schicht 8 aus Teflon versehen, der ein Haften des Stempels 7 an der Oberfläche der Membran 3 verhindert. Gleichzeitig wird die Überlappungsstelle erhitzt, z.B. auf ca 150° C. Dieser Erhitzung er folgt vorzugsweise mit einem geheiztem Stempel 7. Durch die Einwirkung des Druckes und der Wärme kommt es zu einer Verschmelzung zwischen den aufeinanderliegenden Schichten 9 einerseits und zusätzlich zwischen den Schichten 9 und dem Material der Sicke 5 und der Membran 3 selbst. Es handelt sich dabei also nicht um eine Adhäsion wie bei einer Klebung, sondern um eine echte Verschmelzung der Materials von Sicke 5, Membran 3 und Schicht 9. Der beschriebene Vorgang dauert nur etwa 2 - 5 s. Danach kann die Einheit aus Sicke 5 und Membran 3 sofort weiter verarbeitet Werden.

In Fig. 3 sind Sicke 5 und Membran 3 nicht mit einer zusätzlichen Schicht versehen, sonder unmittelbar aufeinandergelegt. Sie werden im Überlappungsbereich durch den Stempel 7 zusammengedrückt, der jedoch keine Wärme zuführt. Von der Einheit 11 wird die Überlappungsstelle mit Ultraschallschwingungen in der Größenordnung von 20 - 40 kHz beaufschlagt. Dadurch kommt es zu einer Anregung der Moleküle des Materials der aufeinanderliegenden Teile 5,3, zu einer starken Erwärmung und zu einem Verschmelzen des Materials dieser beiden Teile jeweils im Oberflächenbereich.

Der Lautsprecherkorb 1 besteht vorzugsweise aus Makrolon, die Membran 3 aus Polykarbonat. Als Material für die Sicke 5 kann in vorteilhafter Weise ein Weich-PVC, ein Polyamid, wie es z.B. unter dem Handelsnamen "Sypronyl" von der Firma Hoechst angeboten wird, oder ein thermoplastisches Polyuretan verwendet werden. Es hat sich gezeigt, daß ein Polyamid oder ein thermoplastisches Polykarbonat für die an die Sicke gestellten Anforderungen hinsichtlich der Federeigenschaft und der Führung der Membran und auch für die erfindungsgemäße Befestigung zwischen der Sicke und der Membran sowie zwischen der Sicke und dem Korb vorteilhaft ist. Die akustischen Eigenschaften des Lautsprechers wie die Klangqualität können dadurch verbessert werden.

**Ansprüche**

1. Lautsprecher, dessen Membran (3) über eine Sicke (5) mit dem Lautsprecherkorb (1) verbunden ist, dadurch gekennzeichnet, daß die Sicke (5) mit der Membran (3) und/oder mit dem Korb (1) durch Heißsiegelung (Fig. 2) verbunden ist.

2. Lautsprecher, dessen Membran (3) über eine Sicke (5) mit dem Lautsprecherkorb (1) verbunden ist, dadurch gekennzeichnet, daß die Sicke (5) mit der Membran (3) und/oder mit dem Korb (1) durch Ultraschallschweißen (Fig. 3) verbunden ist.

3. Lautsprecher, dessen Membran (3) über eine Sicke (5) mit dem Lautsprecherkorb (I) verbunden ist, dadurch gekennzeichnet, daß die Sicke (5) mit der Membran (3) und/oder mit dem Korb (1) durch eine Wärmebehandlung der Teile verbunden ist.

4. Lautsprecher nach Anspruch 3, dadurch gekennzeichnet, daß die Wärmebehandlung eine Druckbeaufschlagung zwischen Sicke (5) und Membran (3) bzw. Korb (1) an den zu verbindenden Bereichen unter gleichzeitiger Erwärmung ist.

5. Lautsprecher nach einem der Ansprüche 1 bis 4, dadurch gekennzeichnet, daß die Sicke (5) aus Weich-PVC besteht.

6. Lautsprecher nach einem oder mehreren der Ansprüche 1 bis 5, dadurch gekennzeichnet, daß die Membran (3) aus Kunststoff, Papier oder Zellulose besteht.

7. Schwingeinsatz für einen Lautsprecher nach einem oder mehreren der Ansprüche 1 bis 6, enthaltend die Membran (3), die Schwingspule (6), die Zentriermembran (4) und die Sicke (5), dadurch gekennzeichnet, daß die Sicke (5) mit der Membran (3) durch Heißsiegelung oder Ultraschallschweißen oder durch eine Wärmebehandlung verbunden ist.

8. Verfahren zur Herstellung eines Lautsprechers nach einem oder mehreren der Ansprüche 1 bis 6, dadurch gekennzeichnet, daß für die Heißsiegelung die Sicke (5) und die Membran (3) bzw. der Korb (1) an der Oberfläche mit einer Schicht (9) aus einem Siegellack versehen und mit einem Stempel (7) unter Einwirkung von Wärme mit Druck zusammengefügt werden.

9. Verfahren nach Anspruch 8, dadurch gekennzeichnet, daß der Stempel (7) mit einem Antihaftmittel (8) überzogen ist.

10. Verfahren nach Anspruch 9, dadurch gekennzeichnet, daß das Antihaftmittel Teflon ist.

11. Verfahren nach einem oder mehreren der Ansprüche 8 bis 10, dadurch gekennzeichnet, daß der Kunststoff Polykarbonat ist.

12. Verfahren nach einem oder mehreren der Ansprüche 8 bis 11, dadurch gekennzeichnet, daß bei einer Membran (3) aus Zellulose oder Papier die Verbindung durch Heißsiegelung erfolgt.

13. Verfahren nach einem oder mehreren der Ansprüche 8 bis 12 oder Schwingeinsatz nach Anspruch 7, dadurch gekennzeichnet, daß als Material für die Sicke (5) ein Polyamid verwendet ist.

14. Verfahren nach einem oder mehreren der Ansprüche 8 bis 12 oder Schwingeinsatz nach Anspruch 7, dadurch gekennzeichnet, daß als Material für die Sicke (5) ein thermoplastisches Polyuretan verwendet ist.

15. Verfahren nach einem oder mehreren der Ansprüche 8 bis 14 oder Schwingeinsatz nach Anspruch 7, dadurch gekennzeichnet, daß als Material für die Membran (3) ein Polykarbonat verwendet ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 541 391 (GRUNDIG) <br><br> * Insgesamt * | 1,3,4, 6-8 | H 04 R  31/00 <br> H 04 R   9/06 |
| X | DE-B-1 252 257 (N.V. PHILIPS) <br><br> * Insgesamt * | 1,3,4, 6-8 | |
| X | FR-A-2 310 053 (N.V. PHILIPS) <br><br> * Insgesamt * | 1-4,6-8 | |
| X | US-A-3 404 053 (TADAO TOKUMA) <br><br> * Insgesamt * | 1,3,4, 6-8 | |
| A | DE-C- 875 212 (SIEMENS) <br> * Ansprüche * | 9 | RECHERCHIERTE SACHGEBIETE (Int. Cl. 3) <br><br> H 04 R |
| A | GB-A-2 094 701 (MATSUSHITA) <br> * Seite 2, Zeilen 58-65; Figur 3 * | 9,10 | |
| A | US-A-4 315 112 (A. HOFER) <br><br> *  Spalte 2, Zeilen 6-45; Figuren * | 6,11, 15 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 16-09-1987 | MINNOYE G.W. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-1 518 285 (J. SPEIGHT AKROYD) <br> * Insgesamt * <br> --- | 5,6,11 -13,15 | |
| A | GB-A-1 384 717 (MATSUSHITA) <br> * Seite 1, Zeilen 33-77; Figuren * <br> ----- | 14 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 16-09-1987 | MINNOYE G.W. |